# EUROPÄISCHE PATENTSCHRIFT

(11) **EP 3 088 812 B1**
(45) Veröffentlichungstag und Bekanntmachung des Hinweises auf die Patenterteilung: **04.12.2019**
(21) Anmeldenummer: 16166763.9
(22) Anmeldetag: 24.04.2016
(51) Int. Cl.: F24F 13/20, B01D 46/00, F24F 13/28

(54) **FILTERKASTEN MIT EINEM GEHÄUSE**
FILTER BOX WITH A HOUSING
CAISSON DE FILTRE DOTE D'UN BOITIER

(30) Priorität: 27.04.2015 DE 102015106406
(43) Veröffentlichungstag der Anmeldung: 02.11.2016
(73) Patentinhaber: Schako Klima Luft Ferdinand Schad KG, 78600 Kolbingen (DE)
(72) Erfinder: MÜLLER, Rainer, Dr., 78600 Kolbingen (DE)
(74) Vertreter: Patentanwälte und Rechtsanwalt Weiß, Arat & Partner mbB

(56) Entgegenhaltungen:
- EP-A2- 1 967 324
- DE-A1- 19 519 565
- DE-A1-102004 012 615
- US-A- 4 323 376
- US-A1- 2008 136 077

## Beschreibung

Die Erfindung betrifft einen Filterkasten mit einem Gehäuse, in dem sich eine Filterzelle befindet, die sich in Eckbereichen des Gehäuses gegen zumindest einen Eckwinkel abstützt.

### Stand der Technik

Derartige Filterkästen sind in vielfältiger Form und Ausführung bekannt und werden hauptsächlich in Kliniken, Laboren und Räumen eingesetzt, die einer guten Filtration der Luft bedürfen.

So zeigt beispielsweise die US 4 323 376 A einen Filterkasten mit einem schnell zu wechselnden Filter.

In der DE 195 19 565 wird ein besonders innovativer Filterkasten beschrieben. Dieser vereinfacht die Wartung um ein Vielfaches, denn in den Eckbereichen seines Gehäuses sind Eckwinkel eingesetzt, wobei ein Schraubenbolzen den Eckwinkel durchsetzt und gegen den Rahmen einer Filterzelle drückt. Durch diesen Spezial-Eckwinkel ist die Befestigung der Filterzelle innerhalb des Filterkastens wesentlich erleichtert.

Zur Wartung, bei Verschleiss oder zum Austauschen der Filterzelle muss dann durch Drehen die Schraube mit einem entsprechenden Werkzeug gelöst werden. Danach wird eine gereinigte oder neue Filterzelle eingesetzt und ein Auslassgitter wieder am Gehäuse, meist ebenfalls durch Schrauben, befestigt. Damit offenbart die US 4 323 376 A einen Filterkasten mit den Merkmalen des Oberbegriffs von Anspruch 1.

### Aufgabe

Der vorliegenden Erfindung liegt nun die Aufgabe zu Grunde, die Wartung noch mehr zu vereinfachen, zu beschleunigen und damit den Arbeitsaufwand noch geringer zu halten.

### Lösung der Aufgabe

Zur Lösung dieser Aufgabe wird ein Filterkasten mit den Merkmalen von Anspruch 1 vorgeschlagen. Bevorzugte Ausführungsformen sind in den abhängigen Ansprüchen definiert.

Erfindungsgemäß durchsetzt ein Bolzen den Eckwinkel und wird über eine Schnellspanneinrichtung gegen den Rahmen der Filterzelle gedrückt.

Damit entfällt die Notwendigkeit, zur Festlegen und zum Herauslösen der Filterzelle in bzw. aus dem Gehäuse ein Werkzeug zu benutzen.

Bevorzugt greifen die Eckwinkel in am Gehäuse vorgesehene Taschen lösbar ein. Dabei kann der Eckwinkel z.B. L-förmig ausgebildet sein und weist mindestens zwei waagerechten Streifen auf, von denen senkrechte Streifen nach unten abragen. Die senkrechten Streifen greifen in Taschen ein, die innen im Filterkasten aus den Seitenwänden herausgeformt oder an den Seitenwänden befestigt sind.

In den Eckbereich der waagerechten Streifen durchsetzt ein Bolzen den Eckwinkel. Dieser Aufbau bewirkt, dass möglichst wenig Platz verschwendet wird und die Filterzelle so groß wie möglich sein kann, da sie nur in den Eckbereichen von der Befestigung angegriffen werden.

Dem Bolzen ist bevorzugt ein Stützfuß zugeordnet, wobei dieser im bevorzugten Ausführungsbeispiel aus einem Kunststoff besteht. Dies hat den Vorteil, dass Kunststoff ein weicheres Material ist als Metall und somit der Rahmen der Filterzelle nicht beschädigt wird.

Der Bolzen wird durch eine Hülse gleitend geführt. Dies hat den Vorteil, dass er nicht manuell oder mit einem Werkzeug bewegt und in einem Gewinde drehend an die Höhe der Filterzelle anzupassen werden muss. Dadurch kann auch die Höhe der Filterzellen variiert werden, da sich der Bolzen einfach auf jede Höhe einstellen kann.

Der Bolzen kann in einem Ausführungsbeispiel der Schnellspanneinrichtung über ein exzentrisch geformtes Knie und einen Kniehebel arretiert werden. Dazu wird der Kniehebel senkrecht in die "offene" Position gestellt und der Eckwickel in ein Gehäuseelement des Filterkastens eingeschoben. Zum Arretieren wird der Kniehebel in die waagerechte "geschlossene" Position gedrückt. Ein Knie des Kniehebels drückt den Bolzen an den Rahmen der Filterzelle und befestigt diese im Filterkasten. Dies ist eine große Vereinfachung und vor allem auch Zeitersparnis.

Ausserdem kann der Bolzen auch in verschiedenen Positionen arretiert werden, wodurch auch hier gewährleistet wird, dass unterschiedlich hohe Filterzellen in den Filterkasten einsetzen kann.

Desweiteren weist der Eckwinkel mindestens einen Haltefuß auf, der an den waagerechten Streifen angebracht ist und nach unten in Richtung Filterausgang ragt. Am Ende des Haltefußes ist ein Magnet angebracht. Dieser hat die Funktion das Luftauslassgitter zu halten. Es wird somit auch hier kein Werkzeug benötigt, um erst das Auslassgitter abzuschrauben, sondern das Gitter wird quasi aufgesetzt und der Magnet hält es. Auch dies vereinfacht die Wartung ungemein.

Ein weiterer großer Vorteil ist, dass der Filterkasten nicht mehr geschraubt, sondern geklebt wird. In der heutigen Zeit ist das besonders vorteilhaft, da es die Installation des Filterkastens vereinfacht.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht eines erfindungsgemäßen Eckwinkels, eingeschoben in Taschen eines Gehäuseelementes eines Filterkastens;
**Figur 2** eine perspektivische Ansicht des Eckwinkels nach Figur 1;

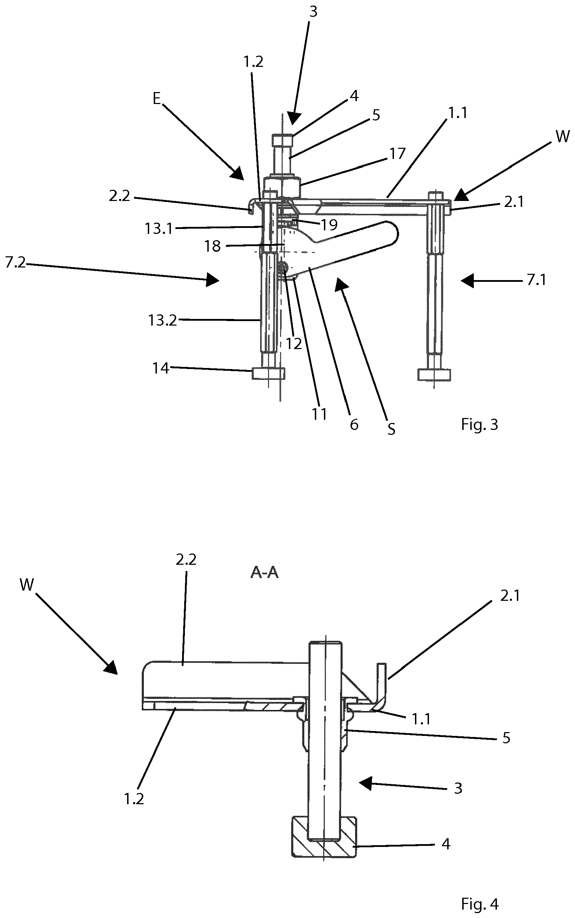

**Figur 3** eine weitere perspektivische Ansicht eines Eckwinkels;
**Figur 4** einen Querschnitt eines Teils des Eckwinkels.

Betreffend die allgemeine Beschreibung eines Filterkastens wird auf die DE 195 19 565 A1 verwiesen. Ein derartiger Filterkasten dient zum Führen von Luft und zum Reinigen dieser Luft, bevor die Luft aus einem Luftauslass austritt. Hierzu ist an dem Filterkasten ein Luftanschluss vorgesehen. In dem Filterkasten befindet sich eine Filterzelle in einem Rahmengestell, wobei dieses Rahmengestell in dem Filterkasten geklemmt festgelegt wird. Hierdurch ist der Austausch erleichtert. Das Festlegen des Rahmengestells geschieht durch Eckwinkel, welche Elemente aufweisen, die das Rahmengestell gegen einen im Filterkasten vorgesehenen meist umlaufenden Randstreifen drücken. Die vorliegende Erfindung bezieht sich auf eine spezielle Ausgestaltung des Eckwinkels und dessen Festlegung in dem Filterkasten.

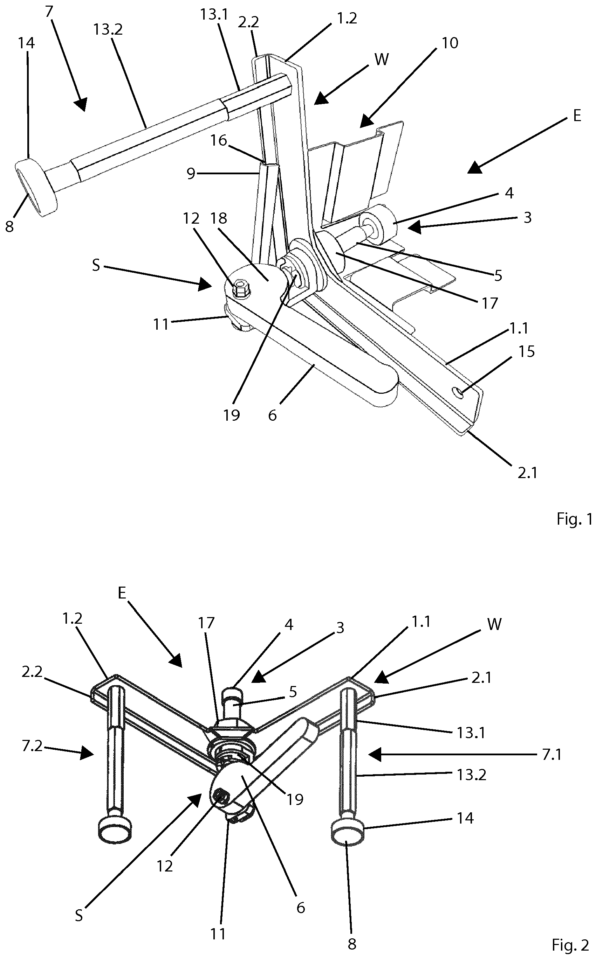

Gemäß Figur 1 weist der Eckwinkel E einen L-förmigen Winkelstreifen W auf, der vorzugsweise im rechten Winkel ausgebildet ist. Dazu besitzt er zwei waagerechte Streifen 1.1 und 1.2, von denen senkrechte Streifen 2.1 und 2.1 nach unten abragen. Die senkrechten Streifen 2.1 und 2.1 greifen in Gebrauchslage in Taschen 9 eines Gehäuseelementes 10 ein, welches ein Teil des Filterkastengehäuses sein kann oder aber als selbstständiges Bauelement ausgebildet ist, welches beispielsweise im Inneren des Filterkastens in den Eckbereichen vernietet oder eingeklebt ist.

Die Taschen 9 werden der Einfachheit halber durch jeweils ein Profil gebildet, von dem ein Streifen beinahe um 180° abgebogen ist. Hierdurch wird eine Einschuböffnung 16 gebildet, in welche die senkrecht verlaufenden Streifen 2.1 und 2.2 des Eckwinkels E eingeschoben werden können.

Der Winkelstreifen W hält einen Bolzen 3, wobei dieser genauer im Eckbereich der waagerechten Streifen 1.1 und 1.2 sitzt. Dieser Bolzen 3 trägt an seinem freien Ende einen Stützfuß 4 und wird gleitbar in einer Hülse 5 geführt. Diese Hülse 5 weist zwischen dem Stützfuß 4 und dem Winkelstreifen W in Aussengewinde auf, auf dem eine Mutter 17 sitzt.

Die Hülse 5 durchsetzt den Winkelstreifen W, wobei andererseits der Mutter 17 ein Wandstreifen 11 aufragt, an dem eine Schnellspanneinrichtung S festgelegt ist. Die Schnellspanneinrichtung S weist einen Kniehebel 6 mit einem exzentrischen Knie 18 auf und kann um ein Drehgelenk 12 bewegt werden.

Unterhalb des exzentrischen Knies 18 des Kniehebels 6 ragt der Bolzen 3 aus der Hülse 5 heraus und kann durch das Knie 18 mit Druck beaufschlagt werden, so dass der Stützfuß 4 gegen den Rahmen der Filterzelle gedrückt wird. Dies geschieht, indem der Kniehebel 6 von einer senkrechten, "offenen" Position in die waagerechte, "geschlossene" Position gedrückt wird. Hierbei wird das Knie 18 exzentrisch bewegt und drückt somit auf den Bolzen 3, der, wie oben schon beschrieben, wiederum gegen den Rahmen der Filterzelle drückt

Weiterhin wird der Bolzen 3 über einen Sprengring 19 so gehalten, so dass er im Zusammenwirken mit dem Stützfuß 4 gleitbar in der Hülse gehalten wird und nicht aus der Hülse 5 gleiten kann. Der Sprengring 19 ist im bevorzugten Ausführungsbeispiel aus Kunststoff ausgebildet.

Mindestens einem der waagerechten Streifen 1.1 und/oder 1.2 ist ein Haltefuß 7.1 und 7.2 zugeordnet. Dieser Haltefuß 7.1 und 7.2 besteht im bevorzugten Ausführungsbeispiel aus zwei Sechskantstäben 13.1 und 13.2 und einer Aufnahme 14. Alle drei Elemente 13.1, 13.2 und 14 werden miteinander verbunden, in eine vorzugsweise runde Öffnung 15 gesteckt und fest mit dem waagerechten Streifen 1.1 und/oder 1.2 verschraubt.

Die Aufnahme 14 ist hohl ausgebildet. Im bevorzugten Ausführungsbeispiel wird hier ein Magnet 8 fest in die Aufnahme 14 eingefasst. Mit diesem Magneten 8 ist es möglich, den, dem Filterkasten zugeordneten, metallischen Auslass zu halten, ohne diesen festschrauben zu müssen.

Desweiteren können in die Aufnahme 14 auch andere Elemente eingesetzt werden, beispielsweise Silikon, um Auslässe aus Kunststoff zu befestigen.

Weiterhin ist noch zu bemerken, dass der Filterkasten der vorliegenden Erfindung geklebt ist.

Die Funktionsweise der vorliegenden Erfindung ist Folgende:
Eine Filterzelle eines Filterkastens wird in einen Filterkasten eingeschoben, bis er an dem entsprechenden Anschlag anliegt. Nunmehr werden die Eckwinkel E in Taschen 9 eines Gehäuselements 10 eingesetzt wird und der Bolzen 3 mit dem Stützfuß 4 über die Schnellspanneinrichtung S gegen den Rahmen der Filterzelle gedrückt wird.

In die Öffnung des Gehäusekastens wird jetzt ein gewünschter Luftauslass eingesetzt und durch die Magnete am Eckwinkel gehalten.

Zum Austauschen der Filterzelle wird der Luftauslass einfach von den Magneten abgezogen und die Schnellspanneinrichtung in entgegengesetzter Weise gelöst.

**Bezugszeichenliste**

| | | | | | |
|---|---|---|---|---|---|
| 1 | waagerechte Streifen | 34 | | 67 | |
| 2 | senkrechte Streifen | 35 | | 68 | |
| 3 | Bolzen | 36 | | 69 | |
| 4 | Stützfuß | 37 | | 70 | |
| 5 | Hülse | 38 | | 71 | |
| 6 | Kniehebel | 39 | | 72 | |
| 7 | Haltefuß | 40 | | 73 | |
| 8 | Magnet | 41 | | 74 | |
| 9 | Taschen | 42 | | 75 | |
| 10 | Gehäuseelement | 43 | | 76 | |
| 11 | Wandstreifen | 44 | | 77 | |
| 12 | Drehgelenk | 45 | | 78 | |
| 13 | Sechskantstab | 46 | | 79 | |
| 14 | Aufnahme | 47 | | | |
| 15 | Öffnung | 48 | | E | Eckwinkel |
| 16 | Einschuböffnung | 49 | | S | Schnellspanneinrichtung |
| 17 | Mutter | 50 | | W | Winkelstreifen |
| 18 | exzentrisches Knie | 51 | | | |
| 19 | Sprengring | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Filterkasten mit einem Gehäuse, in dem sich eine Filterzelle befindet, die sich in Eckbereichen des Gehäuses gegen zumindest einen Eckwinkel (E) abstützt, und mit einem Luftauslassgitter,
**dadurch gekennzeichnet,**
**dass** ein Bolzen (3) den Eckwinkel (E) durchsetzt und über eine Schnellspanneinrichtung (S) gegen den Rahmen der Filterzelle gedrückt ist, wobei
dem Eckwinkel (E) mindestens ein Haltefuß (7.1 und 7.2) zugeordnet ist, wobei
dem mindestens einen Haltefuß (7.1 und 7.2) an dessen Ende eine Aufnahme (14) zugeordnet ist, in welcher ein Magnet (8) eingefasst ist, welcher das Luftauslassgitter hält.

2. Filterkasten nach Anspruch 1, **dadurch gekennzeichnet, dass** der Eckwinkel (E) in am Gehäuse vorgesehene Taschen (9) lösbar eingreift.

3. Filterkasten Anspruch 1 oder 2, **dadurch gekennzeichnet, dass** der Eckwinkel (E) eine L-Form mit zumindest zwei waagerechten Streifen (1.1 und 1.2) aufweist, von denen senkrechte Streifen (2.1 und 2.2) nach unten abragen, welch letztere in die Taschen (9) eingreifen, während die waagerechten Streifen (1.1 und 1.2) den Bolzen (3) halten.

4. Filterkasten nach Anspruch 1 und 2, **dadurch gekennzeichnet, dass** dem Bolzen (3) ein Stützfuß (4) zugeordnet ist.

5. Filterkasten nach wenigstens einem der Ansprüche 1 - 4, **dadurch gekennzeichnet, dass** der Bolzen (3) durch eine Hülse (5) geführt ist, welche den Eckwinkel (E) durchsetzt.

6. Filterkasten nach wenigstens einem der Ansprüche 1 - 5, **dadurch gekennzeichnet, dass** der Bolzen (3) über ein exzentrisches Knie (18) eines Kniehebels (6) bewegbar ist.

7. Filterkasten nach den Ansprüchen 5 und 6, **dadurch gekennzeichnet, dass** der Kniehebel (6) über ein Drehgelenk an einem Wandstreifen (11) angeordnet ist, der von der Hülse (5) aufragt.

8. Filterkasten nach wenigstens einem der Ansprüche 1 - 7, **dadurch gekennzeichnet, dass** der Bolzen (3) in verschiedenen Positionen arretierbar ist.

9. Filterkasten nach wenigstens einem der vorhergehenden Ansprüche, **dadurch gekennzeichnet, dass** der Magnet (8) einen dem Gehäuse zugeordneten Auslass hält.

10. Filterkasten nach wenigstens einem der Ansprüche 1 - 9, **dadurch gekennzeichnet, dass** der Filterkasten selbst geklebt ist.

## Claims

1. Filter box with a housing in which there is a filter cell which is supported in corner regions of the housing against at least one corner angle (E), and with an air outlet grille,
**characterized in that**
a bolt (3) passes through the corner angle (E) and is pressed against the frame of the filter cell via a quick-action clamping device (S),
wherein at least one retaining foot (7.1 and 7.2) is associated with the corner angle (E),
wherein a receptacle (14) is assigned to the at least one holding foot (7.1 and 7.2) at its end, in which a magnet (8) is enclosed which holds the air outlet grille.

2. Filter box according to claim 1, **characterized in that** the corner angle (E) engages detachably in pockets (9) provided on the housing.

3. Filter box according to claim 1 or 2, **characterized in that** the corner angle (E) has an L-shape with at least two horizontal strips (1.1 and 1.2), from which vertical strips (2.1 and 2.2) project downwards, the latter engaging in the pockets (9), while the horizontal strips (1.1 and 1.2) hold the bolt (3).

4. Filter box according to claims 1 and 2, **characterised in that** a support leg (4) is associated with the bolt (3).

5. Filter box according to at least one of claims 1 - 4, **characterised in that** the bolt (3) is guided through a sleeve (5) which passes through the corner angle (E).

6. Filter box according to at least one of claims 1 - 5, **characterized in that** the bolt (3) is movable over an eccentric knee (18) of a knee lever (6).

7. Filter box according to requirements 5 and 6, **characterised in that** the toggle lever (6) is arranged via a pivot joint on a wall strip (11) which projects from the sleeve (5).

8. Filter box according to at least one of claims 1 - 7, **characterised in that** the bolt (3) can be locked in different positions.

9. Filter box according to at least one of the preceding claims, **characterized in that** the magnet (8) holds an outlet associated with the housing.

10. Filter box according to at least one of claims 1 - 9, **characterized in that** the filter box is self-bonded.

## Revendications

1. Caisson de filtre avec un boîtier dans lequel se trouve une cellule filtrante qui s'appuie dans les zones de coin du boîtier contre au moins un angle de coin (E), et avec une grille de sortie d'air,
**caractérisé par le fait**
**qu'**un boulon (3) traverse l'angle de coin (E) et est pressé contre le cadre de la cellule filtrante par l'intermédiaire d'un dispositif de serrage rapide (S), dans lequel
à l'angle de coin (E) est associé au moins un pied de maintien (7.1 et 7.2), dans lequel
à l'au moins un pied de maintien (7.1 et 7.2) est associé, à son extrémité, un moyen de réception (14) dans lequel est enchâssé un aimant (8) qui maintient la grille de sortie d'air.

2. Caisson de filtre selon la revendication 1, **caractérisé par le fait que** l'angle de coin (E) s'engage de manière amovible dans des poches (9) prévues dans le boîtier.

3. Caisson de filtre selon la revendication 1 ou 2, **caractérisé par le fait que** l'angle de coin (E) présente une forme en L avec au moins deux bandes horizontales (1.1 et 1.2) à partir desquelles des bandes verticales (2.1 et 2.2) ressortent vers le bas, ces dernières s'engageant dans les poches (9), tandis que les bandes horizontales (1.1 et 1.2) maintiennent le boulon (3).

4. Caisson de filtre selon les revendications 1 et 2, **caractérisé par le fait qu'**au boulon (3) est associé un pied de support (4).

5. Caisson de filtre selon au moins l'une des revendications 1 à 4, **caractérisé par le fait que** le boulon (3) est guidé à travers un manchon (5) qui traverse l'angle de coin (E).

6. Caisson de filtre selon au moins l'une des revendications 1 à 5, **caractérisé par le fait que** le boulon (3) est déplaçable par l'intermédiaire d'une genouillère excentrique (18) d'un levier à genouillère (6).

7. Caisson de filtre selon les revendications 5 et 6, **caractérisé par le fait que** le levier à genouillère (6) est disposé par l'intermédiaire d'un joint articulé sur une bande de paroi (11) qui ressort vers le haut du manchon (5).

8. Caisson de filtre selon au moins l'une des revendications 1 à 7, **caractérisé par le fait que** le boulon (3) peut être arrêté dans différentes positions.

9. Caisson de filtre selon au moins l'une des revendications précédentes, **caractérisé par le fait que** l'aimant (8) maintient une sortie associée au boîtier.

10. Caisson de filtre selon au moins l'une des revendications 1 à 9, **caractérisé par le fait que** le caisson de filtre est lui-même collé.
